# EUROPEAN PATENT SPECIFICATION

(11) **EP 3 518 396 B1**
(45) Date of publication and mention of the grant of the patent: **17.04.2024**
(21) Application number: 18185084.3
(22) Date of filing: 23.07.2018
(51) Int. Cl.: H02K 7/08, H02K 9/06, H02K 11/215, H02K 1/30, H02K 7/14, H02K 15/16, H02K 5/20

(54) **DRIVE APPARATUS FOR SEWING MACHINES**
ANTRIEBSVORRICHTUNG FÜR NÄHMASCHINEN
APPAREIL D'ENTRAÎNEMENT POUR MACHINES À COUDRE

(30) Priority: 25.01.2018 TW 107102727
(43) Date of publication of application: 31.07.2019
(73) Proprietor: H. S. Machinery Co., Ltd, 23867 New Taipei City (TW)
(72) Inventor: CHAN, Tzu San, New Taipei City 23867 (TW)
(74) Representative: Baldwin, Mark

(56) References cited:
- CN-A- 101 359 852
- CN-A- 103 132 257
- CN-A- 105 839 309
- CN-U- 201 933 294
- CN-U- 202 026 186
- CN-U- 203 883 649
- CN-U- 205 356 049

## Description

### BACKGROUND OF THE INVENTION

### 1. Field of the Invention

The invention relates to sewing machines and more particularly to drive apparatus for sewing machines.

### 2. Description of Related Art

A reliable drive apparatus is essential for quality operation of a sewing machine. The drive apparatus includes a driving mechanism and a position sensor. The driving mechanism may comprise an electric motor comprising a housing, a stator, a rotor, a cover, a bearing and an encoder. An important issue to be addressed is how to correctly assemble a motor shaft of the motor and a sleeve in a forepart of the sewing machine. Conventionally, front and rear bearings are used to rotatably support the motor shaft, which is in turn connected to the sleeve by means of a coupler or the like. However, such an assembly is complicated, time consuming and difficult to make. Further, maintenance costs are prohibitively high.

Regarding the position sensor, an additional magnet is provided (additional to the magnet in the rotor) so that the encoder is capable of determining the relative positions of the north and south magnetic poles. Conventionally, the encoder is mounted on the cover and the additional magnet takes the form of an annular magnet mounted on the motor shaft so that the encoder may correctly determine the relative positions of the north and south magnetic poles. Alternatively, a sensor is used to sense a magnet that is co-rotated with the motor shaft so that the rotational speed of the motor shaft or phase can be sensed.

CN105839309 discloses a sewing machine, a motor thereof and an electric control device of the sewing machine, and belongs to the technical field of sewing machines. By the aid of the sewing machine, the motor and the electric control device, the problem of inconvenience in assembling motors at presents can be solved. The motor of the sewing machine comprises a stator, a rotor and magnetic steel. A hall sensor is fixed onto the stator, and the magnetic steel is fixed onto the rotor. The sewing machine, the motor and the electric control device have the advantages that the magnetic steel is fixed onto the rotor, and accordingly the assembling efficiency can be improved.

CN203883649 provides a mounting structure and a special assembling tool for a bearingless servo motor, and the mounting structure and the special assembling tool belong to the technical field of machinery. The mounting structure and the special assembling tool solve the problems of the existing bearingless servo motor that the debugging efficiency is low and the concentricity between the rotor and the stator is low. The bearingless servo motor comprises a shell body, a permanent magnet rotor and a stator winding, wherein the stator winding is fixedly connected with the shell body, and the permanent magnet rotor is provided with a hollow rotor shaft; the mounting structure comprises a pedestal, a main shaft is positioned in the pedestal; and the shell body is fixed on the pedestal, the hollow rotor shaft sleeves the main shaft, the side wall of the hollow rotor shaft is in threaded connection with screws, and the end surfaces of the screws can be pressed against the outer side surface of the main shaft. The special assembling tool for the bearingless servo motor comprises a tubular rotor sleeve, and the wall thickness of the rotor sleeve is identical with the size of a gap between the stator winding and the permanent magnet rotor. The mounting structure for the bearingless servo motor has the advantages of convenient debugging and high efficiency. The special assembling tool effectively improves the concentricity between the stator winding and the permanent magnet rotor.

CN201933294 discloses a connecting structure of a direct-driving motor and an overlock machine, which comprises a machine head (1) of the overlock machine and the direct-driving motor (2), wherein the direct-driving motor (2) comprises a stator assembly (21), a rotor assembly (22) and a machine housing (23), wherein the rotor assembly (21) is nested in the machine housing (23). The connecting structure is characterized in that the machine housing (23) is arranged at the side of the machine head (1) through a position adjustment plate (4). In the utility model, by replacing the position adjusting plates at the different positions, the direct-driving motor can be applied in the overlock machines with different brands. In this way, the development cost and the management expense can be reduced, the large-scale production is convenient, the cost can be reduced, and the research and development cycle can be shortened.

CN205356049 discloses a novel hemming machine directly drives motor, including the motor cabinet, be equipped with on the motor cabinet with main shaft matched with electric motor rotor, the main shaft is worn to locate in the electric motor rotor and through main shaft locking screw and electric motor rotor fastening connection, the electric motor rotor overcoat is equipped with the motor stator with the motor cabinet fastening connection, the motor stator other end is equipped with the hand wheel, electric motor rotor's the other end extends to motor stator and outer and be connected with the hand wheel, electric motor rotor includes the rotor shaft, and the rotor shaft middle part is extended along the radial direction of rotor shaft and is formed rotor core, is close to the one end of casing on the rotor shaft and extends the cooling fan who forms cylindrical structure along the radial direction of rotor shaft, be equipped with in the rotor shaft with the rotor shaft concentric and with main shaft matched with step bolt through -hole, motor stator includes the stator basal portion, be equipped with in the stator basal portion with rotor core matched with stator through -hole, the outer periphery of stator basal portion extends along the radial orientation of stator basal portion and forms four one at least bolted connection holes.

CN101359852 belongs to a sewing machine technique, especially a motor structure that can directly drive the sewing machine is designed which can improve the efficiency of power transmission, reduce energy loss in transmission process, and is characterized in that a motor rotor 6 that is fixedly connected with a sewing machine spindle 2 is designed. A V-shaped groove is designed on the sewing machine spindle 2 of the sewing machine 1, a rotor fixed screw 5 is used to fix the motor rotor 6 on the sewing machine spindle 2, and a motor front end cover 3 is fixed on a thread hole of the end face of the sewing machine 1, then a motor stator 4 is arranged in close relationship with a motor front end cover 3, and then an motor rear cover 7 is closed, four fixed screws 8 are used to fix the motor rear cover 7 with the motor front end cover 3, the motor stator 4 is wrapped, and then a hand wheel 9 is fixed on the motor rotor 6 with a hand wheel fixed screw 10 to realize the connection with the sewing machine spindle 2, finally a hand wheel cover 11 is closed, and in order to avoid external filth from entering the motor, an motor cover 12 is disposed afterwards.

CN103132257 relates to a heat dissipating method for a sewing machine with a direct-drive motor. The heat dissipating method is characterized in that an adapter seat is correspondingly connected at a power input main shaft end of the head portion of the sewing machine, thus the direct-drive motor can be arranged though the adapter seat, and the adapter seat is a seat body with suitable thickness, so that a plurality of air intake groove holes can be formed in the outer periphery of the adapter seat. Thus, by utilization of a negative pressure phenomenon generated when the motor operates to drive a fan on a main shaft to rotate, cold air around is sucked in through the air intake grooves and then guided into a machine to be used for heat dissipation of the motor and internal components of the machine body.

Both conventional technologies employ an additional magnet for obtaining operating parameters of the motor shaft. The only difference between them is one has the magnet mounted on the motor shaft and the other has a pulley for transmitting purposes. Neither of them senses parameters of the sleeve. Further, the annular magnet may cause errors due to a phase difference between the annular magnet and the magnet in the rotor. As a result, operating parameters of the motor shaft cannot be correctly sensed, which in turn compromises control of the sewing machine.

Thus, the need for improvement still exists.

### SUMMARY OF THE INVENTION

The invention provides a drive apparatus for a sewing machine comprising a sleeve secured to an extension shaft of the sewing machine, and having an annular flange; a rotor disposed on the sleeve, and positioned against the flange; and a motor assembly comprise a housing having an inner space to dispose a stator set and a passage through which one end of the sleeve extends; wherein the stator set disposed in the inner space to relatively surround the rotor, making the rotor, sleeve and extension shaft are co-rotated.

The motor assembly of the drive apparatus further comprises an internally disposed annular support spaced around the passage providing the sleeve extending and configured to support the stator set.

The drive apparatus may further comprise a sensor secured to the stator set for sensing the position of the rotor relative to the stator set.

The motor assembly of the drive apparatus may further comprise a guide plate fastened to the housing, and a first fan disposed in both an opening of the guide member and the sleeve.

The guide plate may be a thin plate member.

The drive apparatus may further comprise a wheel secured to the other end of the sleeve.

The motor assembly may further comprise a guide element fastened to one side of the housing, and a first fan at least partially disposed in a space defined by the guide element.

The guide element may further comprise an opening, a plurality of inlets and an outlet connected with said space.

The drive apparatus further comprises a fan secured to the other end of the sleeve.

The drive apparatus further comprises a hood fastened to the other side of the housing.

The hood includes a releasable lid.

The lid is configured to detach from the hood and be replaced by a cylindrical adapter, the cylindrical adapter being configured to connect an attachment member to the sleeve.

The drive apparatus may provide one or more of the following advantages and benefits when compared with the conventional art. The rotor is mounted on the sleeve directly without a coupler. No bearing is provided between the rotor and the stator set. The sensor is provided in the motor housing and is adapted to sense the relative positions of the north and south magnetic poles in cooperation with the rotor. Thus, the assembly is precise. Further, the sensing results are correct. Furthermore, correct operating parameters of the motor shaft can be obtained.

### BRIEF DESCRIPTION OF THE DRAWINGS

FIG. 1 is a perspective view of a drive apparatus for a sewing machine according to a first embodiment not part of the invention;
FIG. 2 is an exploded view of FIG. 1;
FIG. 3 is a longitudinal sectional view of the drive apparatus of FIG. 1;
FIG. 4 is a perspective view corresponding to FIG. 1 showing the drive apparatus with an attachment member;
FIG. 5 is a perspective view of the assembled drive apparatus and attachment member;
FIG. 6 is a perspective view of a motor housing of the drive apparatus of FIG. 1;
FIG. 7 is a perspective view of a drive apparatus for a sewing machine according to a second embodiment, which is part of the invention;
FIG. 8 is an exploded view of FIG. 7;
FIG. 9 is a longitudinal sectional view of the drive apparatus of FIG. 7;
FIG. 10 is a perspective view corresponding to FIG. 7 showing the drive apparatus with an attachment member and an adapter;
FIG. 11 is a perspective view of the assembled drive apparatus and attachment member; and
FIG. 12 is a perspective view of a motor housing of the drive apparatus of FIG. 7.

### DETAILED DESCRIPTION

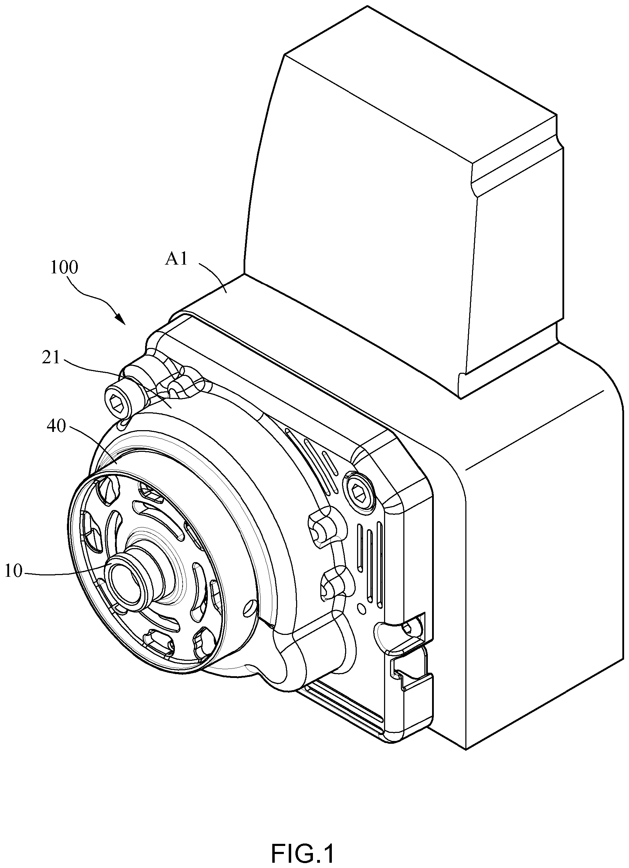

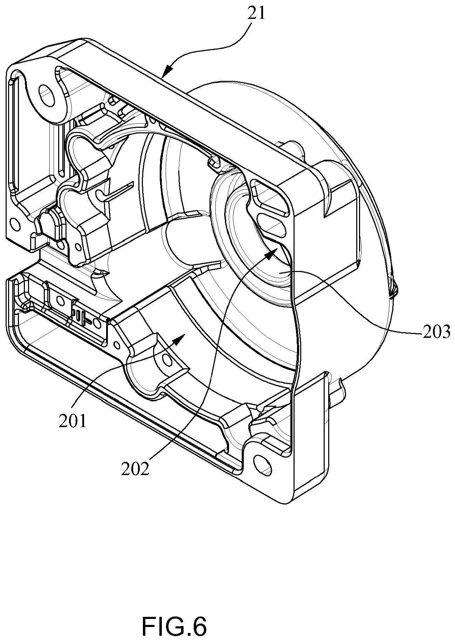

Referring to FIGS. 1 to 6, a drive apparatus 100 for a sewing machine is shown mounted to a body part of a sewing machine. The body part may be a forepart A1 of the sewing machine. The forepart A1 may include a cavity A12 that is open at its lowermost side (or at the bottom, or base, of the forepart A1) and an extension shaft A11 projecting from the cavity A12.

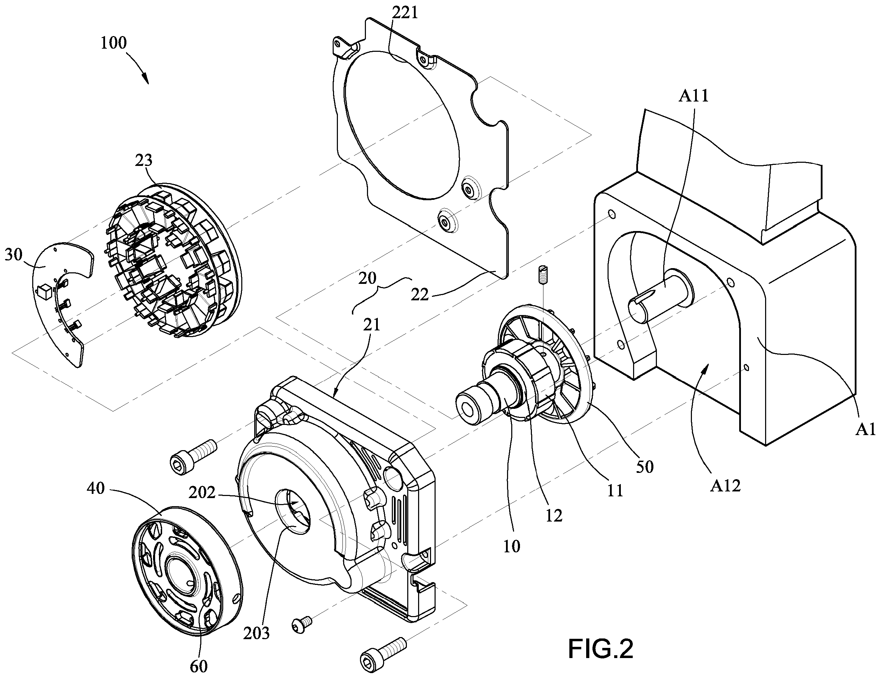

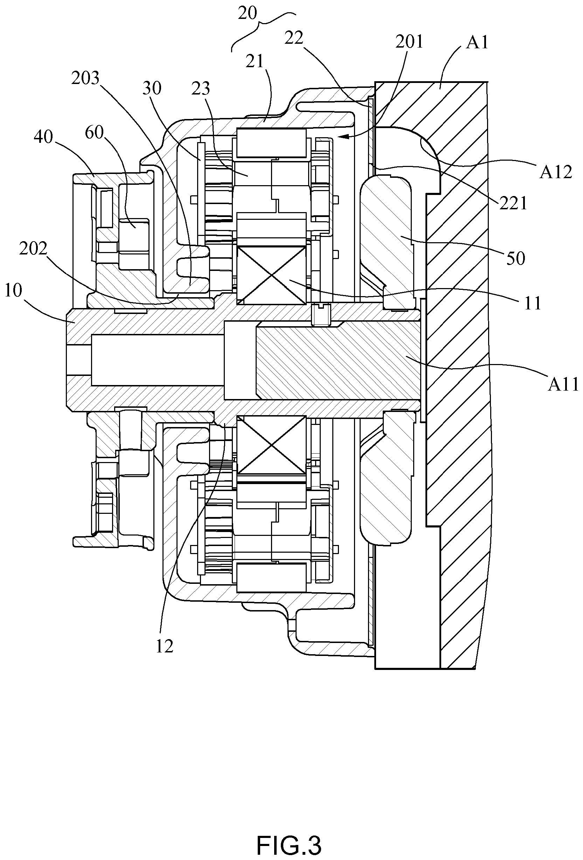

As best seen in FIGS. 2 and 3, the drive apparatus 100 comprises a sleeve 10 secured to the extension shaft A11 so as to be rotatable with the extension shaft A11, and an annular flange 12 provided on the sleeve 10. A rotor 11 provided on the sleeve 10 and positioned by abutting, or pressing, against the flange 12.

The drive apparatus 100 further comprises a motor assembly 20 comprising a housing 21 secured to the forepart A1. The housing 21 has an open end and a closed end and defines an inner space 201. An annular support 203 is disposed in the inner space 201 at the closed end of the housing 21. The annular support 203 defines a passage 202 in the closed end of the housing 21 through which the sleeve 10 extends.

There is a guide member 22 fastened to the housing 21 located between the inner space 201 and the forepart A1. The guide member 22 has an opening 221 connecting to the inner space 201. The guide member 22 is a thin plate member as shown in FIG. 2.

The motor assembly 20 further comprises a stator set 23 disposed in the inner space 201. The stator set 23 is positioned by abutting, or pressing against, the annular support 203. When the drive apparatus 100 is assembled, the sleeve 10 extends through the passage 202 in the closed end of the housing 21 and the rotor 11, provided on the sleeve 10, is surrounded by the stator set 23. The rotor 11, sleeve10 and extension shaft A11 are co-rotatable.

The drive apparatus 100 further comprises a first cooling fan 50 mounted on an inner end of the sleeve 10 and spaced from the rotor 11. The first cooling fan 50 is disposed between the opening 221 and the sleeve 10 and is at least mainly disposed within the cavity A12. As shown in FIG. 3, the first cooling fan 50 may be partially disposed in the opening 221 and, optionally, also in the inner space 201.

The drive apparatus 100 further comprises a wheel 40 and a second cooling fan 60 that is formed integrally with the wheel 40. The wheel 40 is fastened on a free end of the sleeve 10 and is disposed outside of the housing 21.

It is to be noted that in other embodiments, the second cooling fan 60 and the wheel 40 may be separate parts that are assembled as a part of the drive apparatus 100.

The drive apparatus 100 further comprises an arcuate sensor 30 that is secured to the stator set 23 for sensing the relative positions of the rotor 11 and the north and south magnetic poles (N and S) without the installation of an additional magnet, such as ring-shaped magnet, for sensing and calibrating purposes. As a result, the rotor 11 can be controlled precisely.

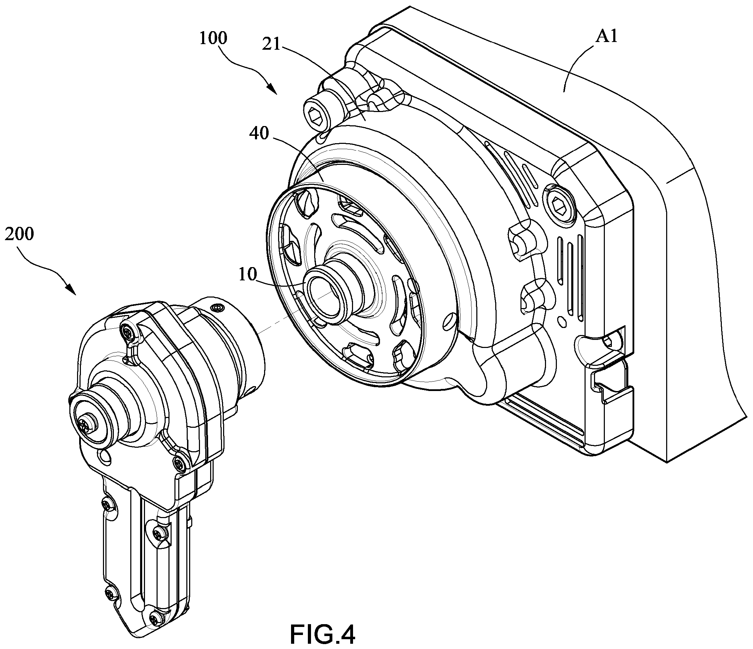

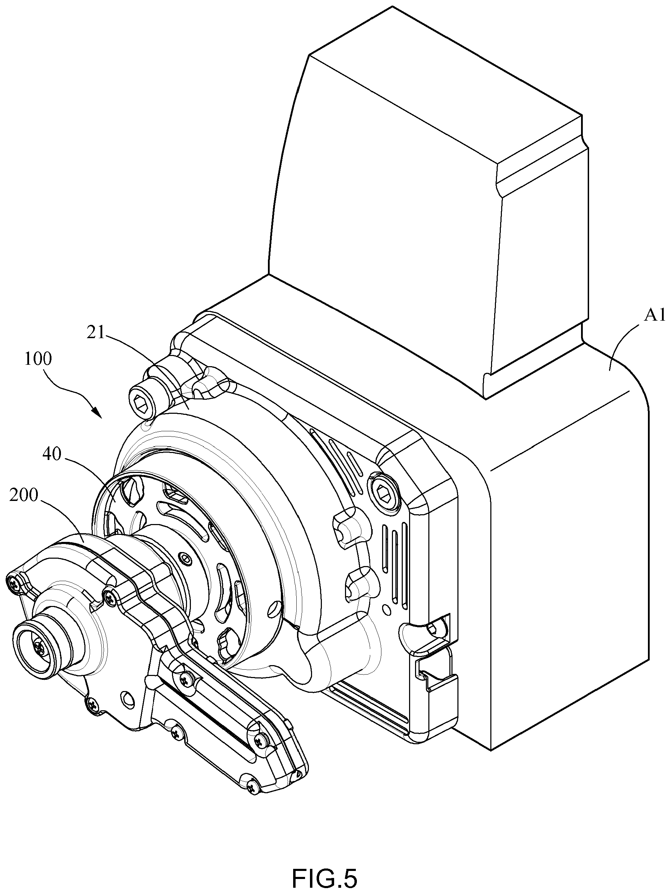

As shown in FIGS. 4 and 5, an attachment member 200 may be selectively secured to the sleeve 10 outwardly of the wheel 40 such that the wheel is disposed between the attachment member and the housing 21.

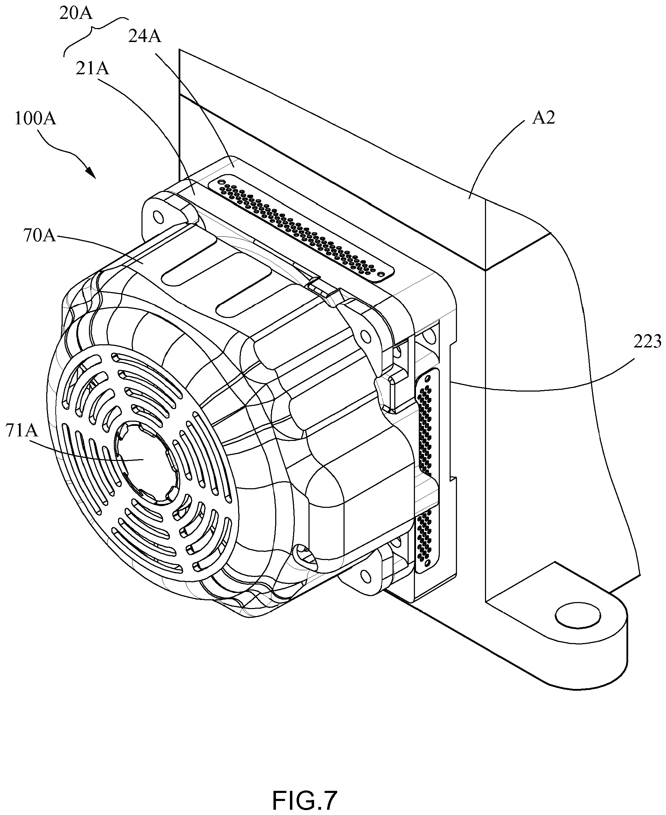

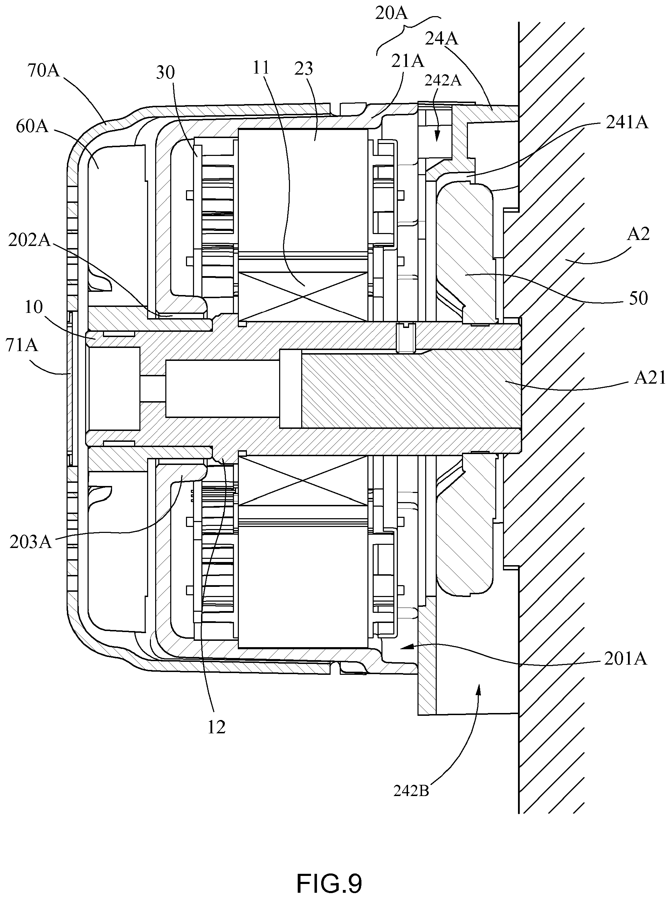

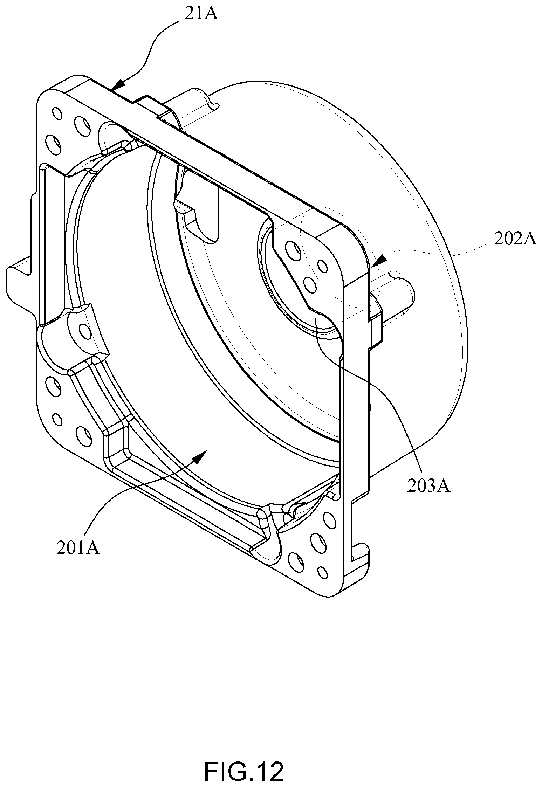

Referring to FIGS. 7 to 12, a drive apparatus 100A in accordance with a second embodiment, which is part of the invention, is shown mounted to a body part of a sewing machine. The body part may be forepart A2 of the sewing machine. The forepart A2 includes an extension shaft A21 projecting from a generally flat outer surface of the forepart A2 or other body part of the sewing machine. As shown in FIG. 9, the shaft A21 may be surrounded by a boss, which may be integral with the outer surface of the body part.

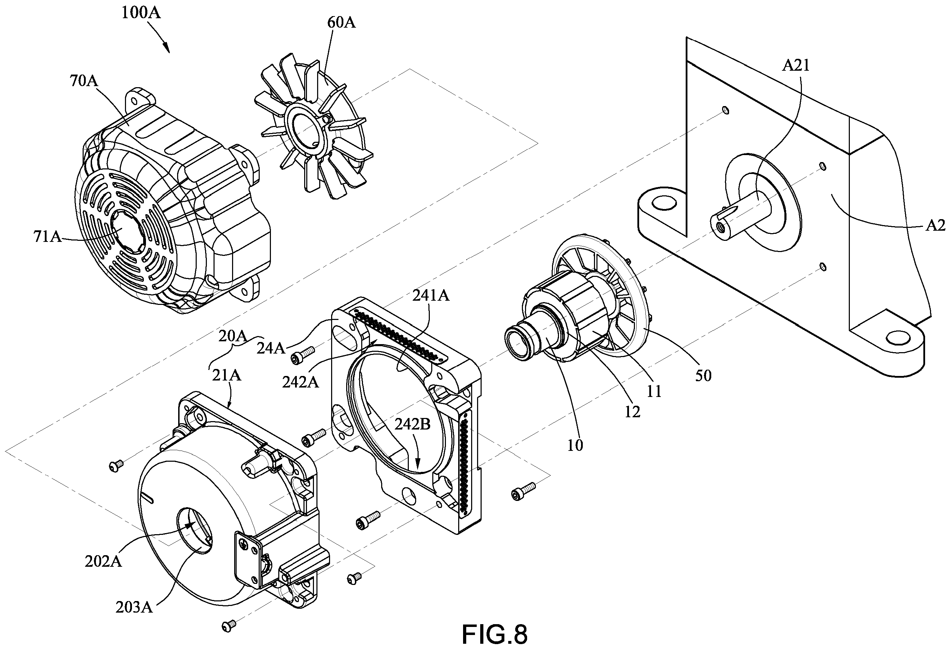

The main components of the second embodiment are similar to those of the first embodiment and have the same functions. Accordingly, the same reference numerals are given to the same components and repeat descriptions are omitted. As best seen in FIGS. 8 and 9, the drive apparatus 100A comprises a sleeve 10 secured to the extension shaft A21 so as to be rotatable with the extension shaft. An annular flange 12 is provided on the sleeve 10 and a rotor 11 is positioned on the sleeve by pressing, or abutting, against the flange 12.

The drive apparatus 100A further comprises a motor assembly 20A comprising a housing 21A secured to the forepart A2 along with a guide member 24A. The housing 21A has a closed end and an open end and defines an inner space 201A. An annular support 203A is disposed in the housing 21A. The annular support 203A defines a passage 202A in the closed end of the housing 21A through which the sleeve 10 extends.

As in the first embodiment, the stator set 23 of the second embodiment is also disposed in the inner space 201A and the rotor 11, sleeve10 and extension shaft A21 are rotatable together. The sensor or a sensing assembly 30 is disposed in the inner space 201A.

The guide member 24A is located between the housing 21A and the forepart A2, and has an opening 241A connecting to the inner space 201A. The opening 241A may connect with a plurality of inlets 242A, which may be provided in the top or side(s) of the guide member 24A and an outlet 242B defined by an opening at a lowermost side, or bottom, of the guide member 24A.

The first cooling fan 50 of the second embodiment is mounted on the inner end of the sleeve 10 generally adjacent the forepart A2 in the same manner as in the first embodiment. Due to the flat outer surface of the forepart A2, the first cooling fan 50 in the second embodiment at least partially received in the opening 241A of the guide member 24A.

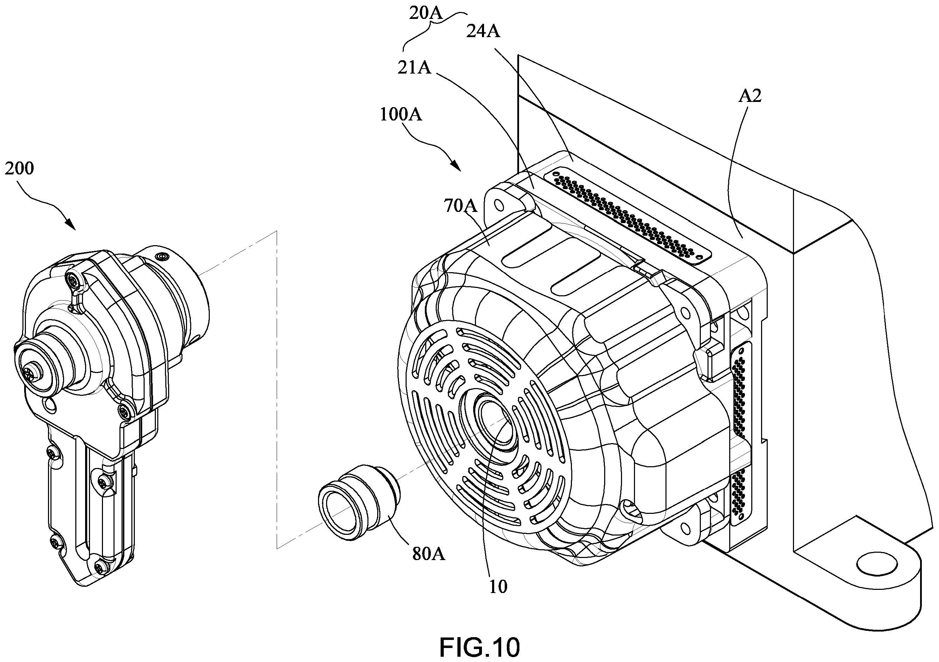

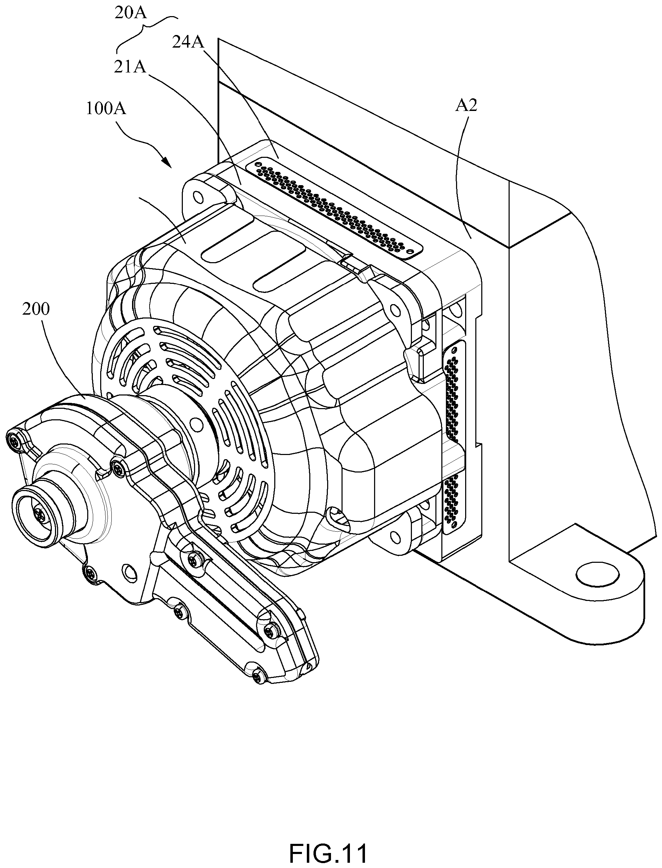

The drive apparatus 100A further comprises a second cooling fan 60A mounted on the free end of the sleeve 10 outside of the housing and is covered by a hood 70A. The second cooling fan 60A has an inner end face that abuts, or is pressed against, the flange 12 to position the fan on the sleeve 10. The hood 70A is mounted on the housing 21A and is provided with a releasable disc shaped member, or sleeve end cover 71A. The sleeve end cover 71A can be detached from the hood 70Aand replaced by a cylindrical adapter 80A, which is adapted to mount, or connect, the attachment member 200 to the sleeve 10, as shown in FIGS. 10 and 11.

The drive apparatus may have at least one of the following advantages and benefits when compared with the conventional art. The rotor is mounted on the sleeve directly without a coupler. No bearing is provided between the rotor and the stator set.

The sensor is provided in the motor housing and is adapted to sense the relative positions of the north and south magnetic poles in cooperation with the rotor. Thus, the assembly is precise. Further, the sensing results are correct. Furthermore, correct operating parameters of the motor shaft can be obtained.

While the invention has been described in terms of illustrated embodiments, those skilled in the art will recognise that the invention can be practiced with modifications within the scope of the appended claims.

## Claims

1. A drive apparatus for a sewing machine comprising:
a sleeve (10) secured to an extension shaft (A21) of the sewing machine and having an annular flange (12);
a rotor (11) disposed on the sleeve (10) and positioned against the flange (12), wherein the rotor (11) sleeve (10) and extension shaft (A21) are co-rotatable; and
a housing (21A) having an open end and a closed end and defining an inner space (201A), wherein an annular support (203, 203A) formed on the housing is disposed in the inner space (201) at the closed end of the housing and defines a passage (202, 202A) through which a free end of the sleeve (10) extends,
wherein a stator set (23) is disposed in the inner space (201A) and is positioned by abutting the annular support,
**characterized in that**
a fan (60a) is mounted on the free end of the sleeve (10) outside of the housing and has an inner end face that abuts the flange (12) to position the fan on the sleeve,
wherein a hood (70A) is fastened to the housing (21A) to cover said fan (60A),
wherein the hood (70A) includes a releasable sleeve end cover (71A), and
wherein the sleeve end cover (71A) is configured to detach from the hood 70A and be replaced by a cylindrical adapter (80A), the cylindrical adapter being configured to connect an attachment member to the sleeve (10).

2. The drive apparatus of claim 1, further comprising a sensor (30) secured to the stator set (23) to provide signals indicating the position of the rotor (11) relative to the stator set (23).

3. The drive apparatus of claim 1 or 2, further comprising a guide member (24A) fastened to one side of the housing (21A) and a first fan (50) at least partially disposed in a space (241A) defined by the guide member (24A).

4. The drive apparatus of claim 3, wherein the guide member (24A) further comprises an opening defining said space (241A) and a plurality of inlets (242A) and an outlet (242B) that are connected with said space (241A).

5. The drive apparatus of claim 1, further comprising magnet sensing means (30) disposed in said housing (21; 21A) to sense rotation of said rotor (11).

6. The drive apparatus of claim 5, wherein said sensing means (30) is fitted to the stator set (23).

7. The drive apparatus of claim 5 or 6, wherein said sensing means (30) detects rotation of north and south poles of said rotor (11).

## Patentansprüche

1. Eine Antriebsvorrichtung für eine Nähmaschine, die Folgendes umfasst:
eine Hülse (10), die an einer Verlängerungswelle (A21) der Nähmaschine befestigt ist und einen ringförmigen Flansch (12) aufweist;
einen Rotor (11), der auf der Hülse (10) angeordnet und an dem Flansch (12) ausgerichtet ist, wobei der Rotor (11), die Hülse (10) und die Verlängerungswelle (A21) gemeinsam drehbar sind; und
ein Gehäuse (21A) mit einem offenen Ende und einem geschlossenen Ende, das einen Hohlraum (201A) bildet, wobei ein an dem Gehäuse ausgebildeter ringförmiger Träger (203, 203A) in dem Hohlraum (201) an dem geschlossenen Ende des Gehäuses angeordnet ist und einen Durchlass (202, 202A) bildet, in den ein freies Ende der Hülse (10)mündet,
wobei eine Stator-Einheit (23) in dem Innenraum (201A) angeordnet ist und durch Anstoßen an den ringförmigen Träger in ihrer Stellung fixiert wird,
wobei ein Rad (60a) am freien Ende der Hülse (10) außerhalb des Gehäuses angebracht ist und eine Innenstirnfläche aufweist, die an den Flansch (12) stößt, um das Rad auf der Hülse zu positionieren,
wobei eine Verkleidung (70A) an dem Gehäuse (21A) befestigt ist, um das Rad (60A) abzudecken,
wobei die Verkleidung (70A) eine abnehmbare Abdeckung für das Hülsenende (71A) beinhaltet, und
wobei die Hülsenendabdeckung (71A) so konfiguriert ist, dass sie sich von der Verkleidung (70A) lösen lässt und durch einen zylindrischen Adapter (80A) ersetzt werden kann, wobei der zylindrische Adapter so gestaltet ist, dass er ein Befestigungselement mit der Hülse (10) verbindet.

2. Die Antriebsvorrichtung nach Patentanspruch 1 umfasst ferner einen Sensor (30), der an der Stator-Einheit (23) angebracht ist, um Signale zu liefern, welche die Position des Rotors (11) gegenüber der Stator-Einheit (23) anzeigen.

3. Die Antriebsvorrichtung nach Patentanspruch 1 bzw. 2 umfasst ferner ein Führungselement (24A), das an einer Seite des Gehäuses (21A) befestigt ist, und ein Führungsrad (50), das zumindest teilweise in einem Raum (241A) angeordnet ist, der durch das Führungselement (24A) gebildet wird.

4. Die Antriebsvorrichtung nach Patentanspruch 3, wobei das Führungselement (24A) ferner eine den Raum (241A) bildende Öffnung sowie eine Vielzahl von mit besagtem Raum (241A) verbundenen Einlässen (242A) sowie einen Auslass (242B) umfasst.

5. Die Antriebsvorrichtung nach Patentanspruch 1 umfasst ferner eine Magnetsensoreinrichtung (30), die in besagtem Gehäuse (21; 21A) angeordnet ist, um die Drehung des genannten Rotors (11) zu erfassen.

6. Die Antriebsvorrichtung nach Patentanspruch 5, wobei die Sensoreinrichtung (30) an der Stator-Einheit (23) angebracht ist.

7. Die Antriebsvorrichtung nach Patentanspruch 5 bzw. 6, wobei die Sensoreinrichtung (30) die Drehung der beiden Pole des Rotors (11) erfasst.

## Revendications

1. Appareil d'entraînement pour une machine à coudre comprenant :
un manchon (10) fixé à un arbre d'extension (A21) de la machine à coudre et ayant une bride annulaire (12) ;
un rotor (11) disposé sur le manchon (10) et positionné contre la bride (12), dans lequel le manchon (10) du rotor (11) et l'arbre d'extension (A21) sont co-rotatifs ; et
un boîtier (21A) ayant une extrémité ouverte et une extrémité fermée et définissant un espace intérieur (201A), dans lequel un support annulaire (203, 203A) formé sur le boîtier est disposé dans l'espace intérieur (201) à l'extrémité fermée du boîtier et définit un passage (202, 202A) à travers lequel s'étend une extrémité libre du manchon (10),
dans lequel un ensemble de stator (23) est disposé dans l'espace intérieur (201A) et est positionné en venant en butée contre le support annulaire,
**caractérisé en ce qu'**un ventilateur (60a) est monté sur l'extrémité libre du manchon (10) à l'extérieur du boîtier et a une face d'extrémité intérieure qui vient en butée contre la bride (12) pour positionner le ventilateur sur le manchon,
dans lequel un capot (70A) est fixé au boîtier (21A) pour recouvrir ledit ventilateur (60A),
dans lequel le capot (70A) comprend un couvercle d'extrémité de manchon libérable (71A), et
dans lequel le couvercle d'extrémité de manchon (71A) est configuré pour se détacher du capot 70A et être remplacé par un adaptateur cylindrique (80A), l'adaptateur cylindrique étant configuré pour connecter un élément de fixation au manchon (10).

2. Appareil d'entraînement selon la demande 1, comprenant en outre un capteur (30) fixé à l'ensemble de stator (23) pour fournir des signaux indiquant la position du rotor (11) par rapport à l'ensemble de stator (23).

3. Appareil d'entraînement selon la demande 1 ou 2, comprenant en outre un élément de guidage (24A) fixé à un côté du boîtier (21A) et un premier ventilateur (50) au moins partiellement disposé dans un espace (241A) défini par l'élément de guidage (24A).

4. Appareil d'entraînement selon la demande 3, dans lequel l'élément de guidage (24A) comprend en outre une ouverture définissant ledit espace (241A) et une pluralité d'entrées (242A) et une sortie (242B) qui sont connectées audit espace (241A).

5. Appareil d'entraînement selon la demande 1, comprenant en outre un moyen de détection d'aimant (30) disposé dans ledit boîtier (21 ; 21A) pour détecter la rotation dudit rotor (11).

6. Appareil d'entraînement selon la demande 5, dans lequel ledit moyen de détection (30) est monté sur l'ensemble de stator (23).

7. Appareil d'entraînement selon la demande 5 ou 6, dans lequel ledit moyen de détection (30) détecte la rotation des pôles nord et sud dudit rotor (11).
